# EUROPÄISCHE PATENTSCHRIFT

(11) **EP 2 848 131 B1**
(45) Veröffentlichungstag und Bekanntmachung des Hinweises auf die Patenterteilung: **20.06.2018**
(21) Anmeldenummer: 14183996.9
(22) Anmeldetag: 08.09.2014
(51) Int. Cl.: A23N 17/00, A01K 5/02

(54) **Verfahren zur Herstellung von Tierfutter aus Futterkomponenten und Vorrichtung hierfür**
Method for the production of animal feed from feed components and device for the same
Procédé de fabrication d'aliments pour animaux à partir de composants d'aliments pour animaux et dispositif associé

(30) Priorität: 10.09.2013 DE 102013109944
(43) Veröffentlichungstag der Anmeldung: 18.03.2015
(73) Patentinhaber: TH. Buschhoff GmbH & Co., 59227 Ahlen (DE)
(72) Erfinder: Wilkes, Reinhard, 59320 Enniger (DE); Buschhoff, Werner, 59227 Ahlen (DE); Buschhoff, Christian, 59227 Ahlen (DE)
(74) Vertreter: Althaus, Arndt

(56) Entgegenhaltungen:
- WO-A1-87/06434
- DE-A1- 3 309 770
- GB-A- 1 129 785
- GB-A- 2 007 990
- GB-A- 2 031 748
- JP-A- H01 132 363

## Beschreibung

Die Erfindung betrifft ein Verfahren zur Herstellung von Tierfutter aus Futterkomponenten, die aus mehreren Trockenstoffen und wenigstens einem Flüssigstoff mit Gewichtsanteilen gemäß einer vorgegebenen Rezeptur bestehen, wobei die einzelnen Futterkomponenten dosiert über Dosiervorrichtungen, deren Dosierleistung gesteuert veränderbar ist, aus Vorratsbehältern bereitgestellt werden, mittels Wiegeeinrichtungen gewichtsmäßig erfasst werden und mittels einer Fördereinrichtung einer Mischeinrichtung zugeführt werden, wobei wenigstens eine Futterkomponente aus Trockenfutter vor dem Mischen mittels einer Bearbeitungseinrichtung, deren Antriebsleistung gesteuert veränderbar ist, insbesondere einer Mühle, bearbeitet wird. Die Erfindung betrifft ferner auch eine Vorrichtung zur Herstellung von Tierfutter aus Futterkomponenten, die mehrere Trockenstoffe und wenigstens einen Flüssigstoff mit Gewichtsanteilen gemäß einer vorgegebenen Rezeptur umfassen und in Vorratsbehältern bevorratet sind, wobei die Vorrichtung Dosiervorrichtungen, deren Dosierleistung gesteuert veränderbar ist, zum dosierten Bereitstellen der jeweiligen Futterkomponente aus dem zugehörigen Vorratsbehälter, Wiegeeinrichtungen zum Erfassen des Gewichts der bereitgestellten Futterkomponente, eine Fördereinrichtung zum Zuführen der Futterkomponenten zu einer Mischeinrichtung, eine Mischeinrichtung und wenigstens eine Bearbeitungseinrichtung, deren Antriebsleistung gesteuert veränderbar ist, insbesondere eine Mühle, zum Bearbeiten wenigstens einer Futterkomponente aus Trockenfutter vor dem Mischen aller Futterkomponenten mittels der Mischeinrichtung aufweist.

In der landwirtschaftlichen Viehhaltung wird für die Tiere Kraftfutter eingesetzt, welches aus unterschiedlichen Futterkomponenten entsprechend einer gewünschten oder gegebenenfalls von der nachverarbeitenden Industrie vorgegebenen und/oder entsprechend den Erfahrungen des jeweiligen Landwirts gewählten Rezeptur hergestellt wird. Das Kraftfutter besteht in der Regel aus einer Mischung von unterschiedlichen Trockenstoffen, wie Weizen, Gerste, Mais, oder andere Getreide mit hohen Anteilen von 20-50 %, weiteren Trockenstoffen wie Sojaschrot, Sonnenblumenschrot, Kalk und dergleichen mit Anteilen von 5-20 %, kleineren Komponentenanteilen wie Mineralien, Premixe, und gegebenenfalls auch Arzneimittel als trockene Zusatzstoffe mit Anteilen unter 5 % sowie zusätzlich einem Flüssigstoff wie Öl ebenfalls mit einem geringen Anteil von meist unter 5 %. Einige dieser Komponenten, insbesondere einige Getreidekomponenten mit hohen Anteilen im Tierfutter, *werden* normalerweise vor dem vermischen mit den weiteren Komponenten in Mühlen zerkleinert, damit die Tiere das Mischfutter besser verdauen können.

Die Verarbeitung der Futterkomponenten zu Tierfutter erfolgt im Regelfall innerhalb so genannter Mischfutterwerke oder Kraftfutterwerke, wobei die Anmelderin unter anderem fahrbare Kraftfutterwerke vertreibt, mit welchen die Futterkomponenten vor Ort zu Tierfutter verarbeitet werden können, ohne dass sich ein Landwirt ein stationäres Kraftfutterwerk anschaffen muss. Je größer allerdings die Menge des benötigten Tierfutters ist, desto eher lohnt sich auch für den Landwirt die Investition in ein eigenes stationäres Kraftfutterwerk.

Bis in die achtziger Jahre hinein wurden vielfach die Futterkomponenten für Tierfutter nach Volumen dosiert, wozu beispielsweise Dosierschnecken eingesetzt wurden, deren Drehzahl als Maß für das zugeführte Volumen der jeweiligen Futterkomponente herangezogen wurde. Da ein solches Verfahren zu ungenau war, werden seit wenigstens 20 Jahren Wiegemischer eingesetzt, denen die einzelnen Futterkomponenten kontinuierlich oder diskontinuierlich im Batch- bzw. Chargenverfahren zugeführt werden. Es wird beispielhaft auf die DE 33 09 770 A1 verwiesen, bei der die Trockenstoffe im Chargenbetrieb auf mechanischen oder elektromechanischen Dosierwagen einzeln ausgewogen und dann einem Mischer mit langsam laufender Mischerschnecke zugeführt werden, wodurch am Ende des Mischvorgangs ein Trägerstoff aus den Trockenstoffen in einem relativ großen Vorratsbehälter bevorratet wird, der in einem anschließenden separaten Schritt mittels eines hochtourig laufenden Mischers mit der oder den Flüssigstoffen vermischt wird. Bei größerem Mengenbedarf führt dies Chargenverfahren dazu, dass der Mischer, aber auch die Bearbeitungskomponenten wie Mühlen, hinsichtlich ihres Leistungsvermögens äußerst stark dimensioniert werden und mit entsprechend hohen Antriebsleistungen ausgerüstet werden müssen. Im Betrieb zeigen sich hohe Stromspitzen speziell beim Anlaufen Z.B. des Mischers oder der Mühlen, da nur dann die Zeiten für die einzelnen Arbeitsvorgänge insbesondere an denjenigen Futterkomponenten, die einen hohen Anteil haben, gering genug bleiben, um bezogen auf die Menge an hergestelltem Tierfutter eine gute Stundenleistung der gesamten Anlage zu erzielen.

Aufgabe der Erfindung ist es, ein Verfahren und eine stationäre Vorrichtung zur Herstellung von Tierfutter zu schaffen, welche bei niedrigerem Energieverbrauch, bei geringeren Anschaffungskosten und geringem Platzbedarf eine hohe Stundenleistung an herzustellendem Tierfutter ermöglichen.

Zur Lösung dieser Aufgabe wird mit der Erfindung verfahrenstechnisch vorgeschlagen, dass kontinuierlich aus den jeweiligen separaten Vorratsbehältern (oder Zwischenbehältern) die Futterkomponenten dosiert entnommen werden und die Dosierleistung aller Dosiervorrichtungen leistungsgeregelt in Abhängigkeit von einer Leitkomponente gesteuert wird. Gemäß einer Verfahrensvariante mit automatisch geregeltem Leitkomponentenwechsel kann sich die Leitkomponente bei Anwendung des Verfahrens regelmäßig ändern bzw. sie wird durch eine Regeleinrichtung geändert, wobei dann vorzugsweise jeweils diejenige Futterkomponente die Leitkomponente bildet, bei deren Bereitstellung gemäß Anteil nach Rezeptur die zugehörige Dosiervorrichtung, oder sofern für die Futterkomponente erforderlich die Bearbeitungseinrichtung, die geringsten Leistungsreserven gegenüber einem Betrieb unter voller Last der jeweiligen Dosiervorrichtung oder Bearbeitungseinrichtung hat. Gemäß einer alternativen Verfahrensvariante ohne regelmäßigen oder automatisch geregelten Leitkomponentenwechsel kann die Leitkomponente während der Herstellung des Tierfutters ohne Änderung beibehalten, bzw. z.B. solange beibehalten werden, bis diese Futterkomponente nach Maßgabe der Rezeptur vollständig oder fast vollständig bereitgestellt wurde. Bei dem erfindungsgemäßen Verfahren werden aufgrund der kontinuierlichen Entnahme sämtlicher Futterkomponenten Stillstandszeiten einzelner Anlagekomponenten (Dosiervorrichtung, Bearbeitungseinrichtung) vermieden, da im Regelfall permanent sämtliche Anlagekomponenten aus den jeweiligen Vorratsbehältern die Futterkomponente mit demjenigen Gewicht bereitstellen, der bezogen auf den Anteil der Leitkomponente am Tierfutter benötigt wird.

Bei einer Verfahrensführung mit Leitkomponentenwechsel kann, falls eine der Anlagekomponenten ihr maximales Leistungsvermögen erreicht, die mit dieser Anlagekomponente hergestellte Futterkomponente zur Leitkomponente werden, nach der dann die Leistung der anderen Anlagekomponenten geregelt wird. Insbesondere mit Blick auf diejenigen Futterkomponenten, die einen hohen Gewichtsanteil haben und daher im Stand der Technik häufig die längste Produktionszeit benötigten, bevor sie einem Mischer zugeführt werden konnten und mit den anderen Futterkomponenten vermischt werden konnten, bewirkt die gemäß dieser erfindungsgemäßen Variante auf ein Fließprinzip geänderte Verfahrensführung bei gleicher erzielbare Stundenleistung eine erhebliche Reduzierung der Anforderungen an das Leistungsvermögen der einzelnen Anlagekomponenten wie z.B. der Mühlen, da aufgrund des kontinuierlichen Entnahme-und Bearbeitungsprozesses eine längere Zeitspanne für die Herstellung derselben Menge zur Verfügung steht. Da jeweils eine der Futterkomponenten die Leitkomponente bildet, werden die Dosierungen aller Futterkomponenten im Prinzip zu jedem Zeitpunkt entsprechend der sich an ihrer Leistungsgrenze befindlichen Anlagekomponente vollautomatisch geregelt, wodurch zugleich der Anteil der einzelnen Futterkomponenten an der Gesamtmischung kontinuierlich dem vorgesehenen Rezeptanteil entspricht. Aber auch bei einer Verfahrensführung ohne Leitkomponentenwechsel oder mit seltenem Leitkomponentenwechsel wird gegenüber der chargenweisen Herstellung eine erhebliche Leistungssteigerung erreicht

Besonders vorteilhaft ist, wenn die Dosiervorrichtung oder die Bearbeitungseinrichtung für die Leitkomponente leistungsoptimierend anhand der maximal erreichbaren Volllast für die jeweilige Anlagekomponente geregelt wird, wodurch mithin eine Anlagekomponente, also eine Dosiervorrichtung oder gegebenenfalls auch Bearbeitungseinrichtung unter Volllast arbeitet, während alle anderen Anlagekomponenten noch über Leistungsreserven verfügen. Durch den kontinuierlichen Betrieb sämtlicher Anlagekomponenten, einschließlich der Mischeinrichtung, werden Stromspitzen vermieden, und nicht nur die (Strom-)-Spitzenlast sinkt sondern auch die Energiekosten für den Betreiber können gesenkt werden.

Da sämtliche Futterkomponenten aus Trockenfutter zeitgleich hergestellt werden, können diese gegebenenfalls mit nur einer zentralen Fördervorrichtung gefördert werden und dann geschichtet, und zwar annähernd in demjenigen Anteilsverhältnis, welches die einzelne Futterkomponente am Tierfutter gemäß Rezeptur ausmacht, der Mischeinrichtung zugeführt werden. Selbst für die Mischeinrichtung kann daher im Vergleich zu einem Mischbehälter, mit dem die gesamte Charge verarbeitet werden musste, eine deutlich geringere Antriebsleistung vorgesehen werden, weil aktuell immer nur ein geringer Anteil des Tierfutter gemischt wird. Durch das "Downsizing" der für die einzelnen Anlagekomponenten installierten Motoren reduzieren sich auch die Anschaffungskosten für die einzelnen Anlagekomponenten.

Die flüssige Futterkomponente/n wird/werden vorzugsweise erst in der Mischeinrichtung zugegeben, wodurch weder die Fördereinrichtung durch Flüssigstoffe verunreinigt werden kann noch ein Verklumpen oder Verfestigen einzelner Futterkomponenten untereinander oder miteinander vor dem Vermischen stattfinden kann. Der Mischeinrichtung kann der Flüssigstoff beispielsweise über eine frequenzgeregelte Dosierpumpe als Dosiervorrichtung zugeführt werden, wozu der Flüssigstoff mit der Dosierpumpe beispielsweise aus einem einer rückwiegenden Waage zugeordneten Behälter oder Speicher entnommen wird.

Um eine möglichst genaue Einhaltung der Rezeptur insbesondere mit denjenigen Futterkomponenten zu erreichen, die einen hohen Anteil in der Rezeptur ausmachen, ist besonders vorteilhaft, wenn wenigstens eine Wiegeeinrichtung insbesondere für diese Futterkomponente/n von einer Bandwaage gebildet wird. Mit Bandwaagen kann selbst bei großen Mengen an zu dosierender bzw. zu fördernder Futterkomponente das pro Zeiteinheit zugeführte Gewicht dieser Futterkomponente zuverlässig bestimmt werden. Zur Erhöhung der Wiegegenauigkeit ist vorteilhaft, wenn die Bandlaufgeschwindigkeit der Bandwaage gemessen wird. Ggf. könnte kurzfristig auch die Bandlaufgeschwindigkeit gesteuert werden, so dass parallel zu der Dosiervorrichtung für dieselbe Futterkomponente die Bandwaage kurzfristig eine zweite ansteuerbare Anlagekomponente bildet, um den aktuell der Fördereinrichtung zugeführten Gewichtsanteil dieser Futterkomponente zu regeln und an die Rezeptur anzupassen. Die Bandwaagen könnten dann Ungenauigkeiten von Schnecken aufweisenden Dosiervorrichtungen ausgleichen, wodurch die Einhaltung der Rezeptur und damit auch die Qualität des Tierfutter auch bei hoher Gesamtleistung nochmals verbessert werden könnte. Bei vereinfachter (und bevorzugter) Verfahrensführung hingegen wird zwar die Bandlaufgeschwindigkeit gemessen, jedoch nicht zur Dosierungsregelung gesteuert.

Die obige Aufgabe wird auch durch eine (stationäre) Vorrichtung bzw. Anlage gelöst, bei der erfindungsgemäß simultan sämtliche Dosiervorrichtungen zur kontinuierlichen Entnahme der Futterkomponenten aus den zugehörigen Vorratsbehältern (oder Zwischenbehältern) betätigbar sind und die Dosierleistung aller Dosiervorrichtungen mittels einer Steuereinrichtung leistungsgeregelt in Abhängigkeit von einer Leitkomponente ansteuerbar ist; auch hier kann , falls ein Leitkomponentenwechsel zugelassen wird, die Auswahl (oder Änderung) der Leitkomponente dergestalt erfolgen, dass jeweils die zugehörige Dosiervorrichtung oder Bearbeitungseinrichtung für die die Leitkomponente bildende Futterkomponente bei deren Bereitstellung gemäß Rezeptur im Vergleich zu den anderen Dosier-oder Bearbeitungseinrichtungen für die jeweils anderen Futterkomponenten die geringsten Leistungsreserven gegenüber einem Betrieb unter Volllast hat. Zeigen die Dosiervorrichtung oder Bearbeitungseinrichtung für eine andere Futterkomponente eine geringere Leistungsreserve, kann diese dann zur Leitkomponente werden, wobei nach Möglichkeit, wie für das Verfahren bereits angedeutet, die Steuerung für die Anlage bestrebt ist, alle Anlagekomponenten leistungsoptimierend zu betätigen, damit wenigstens eine der Anlagekomponenten nahe ihrer vollen Leistungsfähigkeit arbeitet und insofern die Gesamtbetriebsdauer der Anlage zur Herstellung einer bestimmten Menge an Tierfutter optimiert ist. Die leistungsgeregelte Ansteuerung der anderen Anlagekomponenten kann jedoch auch ohne Leitkomponentenwechsel anhand einer ggf. vorgegebenen Leitkomponente stattfinden.

Besonders vorteilhaft ist bei der Vorrichtung, wenn wenigstens eine Wiegeeinrichtung aus einer Bandwaage besteht, wobei vorzugsweise die Bandwaage mit einer Einrichtung zum Messen der Bandlaufgeschwindigkeit der Bandwaage versehen ist. Auch hier könnte zusätzlich die Bandlaufgeschwindigkeit der Bandwaage zur kurzfristigen exakteren Dosierung der zugehörigen Futterkomponente steuerbar sein.

Insbesondere für eine platzsparende Anordnung sämtliche Anlagekomponenten in Hallen niedriger Bauhöhe ist besonders vorteilhaft, wenn die Mischeinrichtung eine schrägstehende Mischerschnecke aufweist. Um die Durchmischung aller Futterkomponenten einschließlich der Flüssigstoffe in einer möglichst kurzen und einfach aufgebauten Mischeinrichtung zu verbessern, kann diese eine gegebenenfalls mehrfach unterbrochene Mischerschnecke aufweisen, wodurch im Betrieb einzelne Anteile der zu mischenden Futterkomponenten diesen Abschnitt der Mischeinrichtung mehrfach durchlaufen bzw. auch die Durchmischung quer zur Mischerschnecke verbessert wird.

Sowohl für das Verfahren als auch die Vorrichtung ist vorteilhaft, wenn unterschiedliche Wiegeeinrichtungen je nach Art und/oder Anteil der Futterkomponente zum Einsatz kommen. Für Futterkomponenten mit hohen oder mittleren Anteilen können vorzugsweise Bandwaagen als Wiegeeinrichtungen vorgesehen werden. Für Futterkomponenten mit geringen Anteilen, insbesondere aber auch für hochpreisige Futterkomponenten wie bestimmte Mineralien, können vorteilhaft rückwiegende Waagen als Wiegeeinrichtungen eingesetzt werden. Die rückwiegenden Waagen können entweder dem Vorratsbehälter zugeordnet sein, vorteilhafter Weise sind sie allerdings Zwischenbehältern zugeordnet, aus denen die jeweilige Futterkomponente mittels der zugehörigen Dosiervorrichtung ausgetragen wird. Dies ermöglicht zugleich, dass im laufenden Betrieb der Zwischenbehälter nachgefüllt werden kann, ohne den Produktionsprozess für das Tierfutter mit der Anlage zu unterbrechen.

Je nach Zusammensetzung des Tierfutters gemäß Rezeptur kann von Vorteil sein, wenn mehrere getrennt voneinander ansteuerbare Bearbeitungseinrichtungen, wie insbesondere Mühlen, für die unterschiedlichen Futterkomponenten vorgesehen sind, denen die zugehörige Futterkomponente aus einem Vorratsbehälter über eine der Dosiervorrichtungen zuführbar ist bzw. zugeführt wird. Durch das Vorsehen mehrerer Mühlen können unterschiedliche Getreidearten optimiert gemahlen werden, ohne aufwändig eine Mühle über unterschiedliche Siebe oder dergleichen an unterschiedliche Malfeinheiten anpassen zu müssen. Jeweils zwischen einer solchen Bearbeitungseinrichtung und der Fördervorrichtung kann eine Bandwaage als Wiegeeinrichtung im Materialfluss angeordnet sein, wobei die Bandwaage zugleich ein Zwischenförderorgan zwischen Mühle einerseits und der (zentralen) Fördereinrichtung andererseits bildet. Andere Futterkomponenten können mittels der zugehörigen Dosiervorrichtung jeweils unmittelbar aus dem Vorratsbehälter für diese Futterkomponente entnommen und einer Bandwaage als Wiegeeinrichtung geführt werden, die dann wiederum den kontinuierlich gewogenen Anteil dieser Futterkomponente der ggf. zentralen Fördereinrichtung zuführt. Eine zentrale Fördereinrichtung kann insbesondere zum Fördern sämtlicher zuvor gewogenen und gegebenenfalls bearbeiteten Futterkomponenten aus Trockenfutter eingesetzt werden. Die Vorratsbehälter und/oder Wiegeeinrichtungen können dabei entlang der Förderstrecke der zentralen Fördereinrichtung verteilt angeordnet werden. Die Anordnung könnte jedoch auch in mehreren Zweigen oder sternförmig mit mehreren Fördereinrichtungen erfolgen.

Zur zusätzlichen Kontrolle der Einhaltung der Rezeptur und zur Bestimmung der hergestellten Menge kann eine Kontrolle-Wiegeeinrichtung im Materialfluss hinter der Mischeinrichtung eingesetzt werden. Auch die Kontrolle-Wiegeeinrichtung kann insbesondere aus einer Bandwaage bestehen.

Weitere Vorteile und Ausgestaltungen des Verfahrens sowie der Vorrichtung ergeben sich aus der nachfolgenden Beschreibung eines in der Zeichnung schematisch stark vereinfacht dargestellten Ausführungsbeispiels für ein stationäres Kraftfutterwerk sowie den Verfahrensablauf beim Auswählen und Ansteuern einer Leitkomponente. In der Zeichnung zeigen:
- **Fig. 1**: beispielhaft anhand eines Schaudiagramms ein Kraftfutterwerk zum Mahlen und Mischen von acht unterschiedlichen Futterkomponenten;
- **Fig. 2**: schematisch stark vereinfacht eine Detailansicht der Mischeinrichtung und der dieser nachgeschalteten Wiegeeinrichtung, teilweise aufgebrochen;
- **Fig. 3**: schematisch in einem Ablaufdiagramm die Verfahrensführung zur Steuerung der Anlagekomponenten der Anlage nach Fig. 1; und
- **Fig. 4**: schematisch anhand eines Ablaufdiagramm beispielhaft die Schritte zur Überprüfung und/oder Änderung der Ansteuergrößen für die Anlagekomponenten zur Bereitstellung einer Leitkomponente.

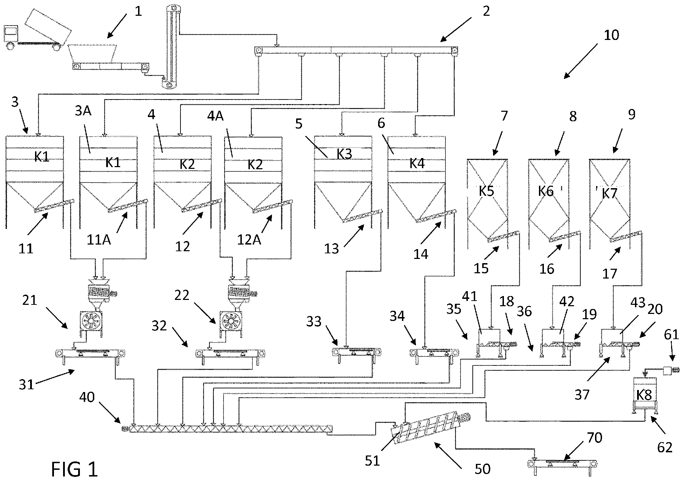

In Fig. 1 ist insgesamt mit Bezugszeichen 10 eine Mahl- und Mischanlage gemäß einer vorteilhaften Ausgestaltung der Erfindung als stationäres Kraftfutterwerk dargestellt und mit Bezugszeichen 10 bezeichnet. Das gesamte Kraftfutterwerk 10 nebst sämtlicher Anlagekomponenten lässt sich nebeneinander beispielsweise in einer Halle auf einem landwirtschaftlichen Hof unterbringen, wobei ggf. einzelne Getreidespeicher, wie noch erläutert werden wird, auch außerhalb der Halle aufgestellt sein könnten. Bei dem dargestellten Kraftfutterwerk 10 ist schematisch mit Bezugszeichen 1 ein Annahmetrichter dargestellt, an welchem mittels Fahrzeugen wie beispielsweise den hofeigenen Traktoren Getreide oder andere Futterkomponenten für ein zu mischendes Tierfutter angeliefert werden können, um dann über eine Verteileinrichtung 2 je nach Art der Futterkomponente entweder in ein Silo 3, 3A, 4, 4A, 5, 6 größerer Baugröße oder in Silos 7, 8, 9 kleinerer Baugröße gelagert und bevorratet zu werden. Im gezeigten Ausführungsbeispiel dienen die Silos 3, 3A, 4, 4A zur Aufnahme unterschiedlicher Getreidesorten wie beispielsweise Gerste, Weizen oder aber auch Mais. Die Silos 5 und 6 dienen zur Aufnahme unterschiedlicher Schrotarten wie beispielsweise Sojaschrot oder Sonnenblumenschrot und die kleineren Silos 7 bis 9 dienen zur Aufnahme unterschiedlicher Mineralien oder Zusatzstoffe für das herzustellende Viehfutter. Insbesondere die großen Silos 3 bis 6 können ggf. auch außerhalb der Halle, in welcher das Kraftfutterwerk 10 aufgestellt ist, angeordnet sein, da es für die vorliegende Erfindung auf die Positionierung der Silos als Vorratsbehälter für einzelne Futterkomponenten K1 bis K7 nicht ankommt.

Mit dem Kraftfutterwerk 10 kann beispielsweise Tierfutter wie Hühnerfutter hergestellt werden, welches entsprechend einer vorgegebenen Rezeptur mit vorgegebenen Gewichtsanteilen aus hier acht unterschiedlichen Futterkomponenten zusammengesetzt werden soll. In dem nachstehenden Diagramm sind die Gewichtsanteile der einzelnen Futterkomponenten K1 bis K8 schematisch dargestellt.

| Komponente | Anteil (%) |
|---|---|
| K1 | 30 |
| K2 | 25 |
| K3 | 15 |
| K4 | 11 |
| K5 | 6 |
| K6 | 5 |
| K7 | 4 |
| K8 | 4 |

Bei den Futterkomponenten K1 bis K7 handelt es sich jeweils um Feststoffe, nämlich die vorgenannten Getreide, Schrot oder Mineralien. Bei der Futterkomponente K8 handelt es sich um einen Flüssigstoff wie beispielsweise Öl. Es versteht sich, dass die Rezeptur nur beispielhaft ist und ein Futter aus anderen Futterkomponenten, anderen Anteilen und/oder mehr oder weniger Futterkomponenten zusammengesetzt sein könnte und die obige Rezeptur nur zur Erläuterung eines Ausführungsbeispiels dient.

Für die Futterkomponente K1 stehen im gezeigten Ausführungsbeispiel wahlweise die Silos 3 oder 3A zur Verfügung, zwischen denen beispielsweise umgeschaltet werden kann. Die Entnahme aus den Silos 3, 3A erfolgt jeweils über eine zugehörige Dosierschnecke 11, 11A, welche über eine weiter nicht dargestellte zentrale Steuereinheit ansteuerbar ist, um die Entnahme der Getreide-Futterkomponente K1 zu beeinflussen. Die Dosierschnecken 11, 11A als Dosiervorrichtungen fördern die Futterkomponente K1 zu einer ersten Mühle 21, in der die Futterkomponente K1 entsprechend den Anforderungen im fertiggemischten Tierfutter gemahlen wird. Auch die Mühle 21 ist an die zentrale Steuereinheit angeschlossen und die Leistungsaufnahme der Antriebsmotoren (nicht gezeigt) für die Mühle 21 kann über die zentrale Steuereinheit ausgewertet und gesteuert werden, um zugleich die Leistungsabgabe bzw. Mengenabgabe der Mühle 21 zu beeinflussen. Das Kraftfutterwerk 10 weist im Ausführungsbeispiel zwei weitere Silos 4, 4A für eine zweite Futterkomponente K2 auf, die über separate, ansteuerbare Dosierschnecken 12, 12A aus den Silos 4, 4A dosiert und gesteuert entnommen wird und einer zweiten Mühle 22 zugeführt wird. Auch die Motoren dieser Mühle 22 sind, wie die Antriebe der Dosierschnecken 12, 12A, mit der zentralen Steuereinheit verbunden und die Leistung sowohl der Dosierschnecken 12, 12A als auch der Mühle 22 wird mit der zentralen Steuereinheit überwacht und kann geregelt werden. Die in den Silos 5 bis 9 bevorrateten weiteren Futterkomponenten K3 bis K7 benötigen keine Weiterverarbeitung durch z.B. Mühlen sondern werden gebrauchsfertig in den jeweiligen Vorratsbehältern 5 bis 9 bevorratet. Die Entnahme der einzelnen Futterkomponenten K3 bis K7 aus den Vorratsbehältern 5 bis 9 erfolgt im gezeigten Ausführungsbeispiel wiederum über jeweils eine von der zentralen Steuereinheit (nicht gezeigt) ansteuerbare Dosierschnecke 13 bis 17. Die Futterkomponenten K3, K4 werden gemäß der hier zugrunde gelegten Rezeptur in mittelgroßen Anteilen von 11 % bzw. 15 % benötigt. Um die Rezeptur so gut wie möglich einzuhalten, ist für jede der Futterkomponenten K1 bis K7 eine Wiegeeinrichtung vorgesehen. Die Futterkomponenten K1, K2 mit hohen Gewichtsanteilen werden im gezeigten Ausführungsbeispiel mittels Bandwagen 31, 32 getrennt voneinander gewogen, wobei beide Bandwaagen 31, 32 im Materialfluss hinter, im Regelfall mit einem Bandende unterhalb des Ausgangs, der jeweiligen Mühle 21, 22 angeordnet sind und ausgelegt sind, den entsprechend dem Gewichtsanteil relativ hohen Durchsatz an der jeweilige Futterkomponente K1, K2 relativ exakt wiegen zu können. Im Materialfluss hinter beiden Wagen 31, 32 ist eine zentrale Fördereinrichtung 40, im gezeigten Ausführungsbeispiel bestehend aus einer Förderschnecke, angeordnet, die jedoch auch aus einem Bandförderer o.dgl. bestehen könnte. Die Futterkomponenten K1, K2 werden der Fördereinrichtung 40 nacheinander zugegeben, wobei durch das Verwiegen der jeweiligen Futterkomponente vor der Übergabe an die Fördereinrichtung 40 im Wesentlichen zu einer bestimmten Zeiteinheit hinter dem Übergabepunkt der zweiten Bandwaage 32 die Futterkomponenten K1, K2 im Wesentlichen mit demjenigen Gewichtsanteil vorliegen, welcher der Rezeptur entspricht.

Die Futterkomponenten K3, K4 aus den Silos 5, 6 werden unmittelbar über die ansteuerbaren Dosierschnecken 13, 14 jeweils einer weiteren Bandwaage 33 für die Futterkomponente K3 und Bandwaage 34 für die Futterkomponente K4 zugeführt, die dann wiederum den gewichtsmäßig gemessenen Komponentenstrom der Fördereinrichtung 40 zuführen, wie mit den Pfeilen angedeutet. Die Futterkomponenten K5 bis K7 aus den Silos 7 bis 9, die in geringen Anteilen, bei der Rezeptur 6 % und weniger, als Feststoffe im Tierfutter benötigt werden, werden vorzugsweise nicht kontinuierlich aus den zugehörigen Vorratsbehältern 7 bis 9 über erste ansteuerbare Dosierschnecken 15 bis 17 entnommen, sondern stattdessen mit den Dosierschnecken 15 bis 17 in Zwischenbehälter gefüllt. Das Wiegen der einzelnen Futterkomponenten K5, K6, K7 erfolgt nicht mit Bandwaagen, sondern mittels rückwiegender Waagen 35 bis 37, die das aktuelle Füllgewicht der Behälter 41, 42, 43, aus denen die jeweilige Futterkomponente K5 bis K7 über weitere, ansteuerbare Dosierschnecken 18, 19, 20 entnommen und der Fördereinrichtung 40 zugeführt werden, wiegen und als Auswertesignale an die Steuereinheit melden. Sowohl die Wiegesignale der Waagen 35 bis 37 für die Zwischenbehälter 41 bis 43 als auch die Förderleistung der Dosierschnecken 18 bis 20 werden an die zentrale Steuereinheit übermittelt und ausgewertet. Bei den Bandwaagen 31 bis 34 könnte zusätzlich über eine Ansteuerung der Bandlaufgeschwindigkeit der jeweiligen Bandwaage 31 bis 34 der jeweils der Fördereinrichtung 40 zugeführte Gewichtsanteil relativ präzise gesteuert werden, insbesondere auch hinter den Mühlen 21, 22, selbst wenn diese einen ungleichmäßigen Materialaustrag zeigen sollten.

Die zentrale Steuereinheit übernimmt hierbei die Aufgabe, sämtliche Anlagenkomponenten 11 bis 22 derart anzusteuern, dass die in einer bestimmten Zeiteinheit der Dosierschnecke 40 zugeführte, mit den jeweiligen Wiegeeinrichtungen 31 bis 36 gemessenen Gewichtsmenge der jeweiligen Futterkomponente K1 bis K7 dem Anteil laut Rezeptur entspricht.

Falls das Herstellverfahren mit Leitkomponentenwechsel durchgeführt wird, können die genannten Anlagekomponenten mit der zentralen Steuereinheit derart leistungsoptimiert gesteuert werden, dass diejenige Anlagekomponente, die im Wesentlichen unter Volllast arbeitet bzw. die geringsten Leistungsreserven gegenüber dem Betrieb unter Volllast hat, zumindest die Dosiergeschwindigkeit der Dosierschnecken 11 bis 14 sowie 18 bis 20 und die Drehzahl der jeweiligen Mühlen 21, 11 steuert, damit, wie bereits angedeutet, im Endbereich der Fördereinrichtung 40 sämtliche Futterkomponenten K1 bis K7 aus Trockenfutter im Wesentlichen in demjenigen Mischungsverhältnis an eine Mischeinrichtung 50 übergeben werden, in welchem sie auch gemäß Rezeptur im Tierfutter vorliegen sollen. Die mit der Fördereinrichtung 40 geförderten Futterkomponenten K1 bis K7 werden anschließend in der Mischeinrichtung 50 durchgemischt, die im gezeigten Ausführungsbeispiel hierzu eine relativ kurze Dosierschnecke 51 umfasst. Die Dosierschnecke ist schrägstehend angeordnet, damit mittels der Mischeinrichtung das Trockenfutter gemischt und nach oben befördert wird, wobei zur Verbesserung der Durchmischung, wie noch erläutert werden wird, die Mischeinrichtung 50 mit einer unterbrochenen Mischerschnecke 51 versehen ist. Im Bereich der Mischerschnecke 51 wird im gezeigten Ausführungsbeispiel auch die aus einem Flüssigstoff bestehende Futterkomponente K8, wie mit dem Pfeil angedeutet, in das Trockenfutter während des Mischvorgangs eingespritzt, und zwar wiederum gesteuert und dosiert in dem Gewichtsanteil gemäß Rezeptur. Die Dosierung der flüssigen Futterkomponente K8 kann beispielsweise über eine ansteuerbare Schnecken- oder Kolbenpumpe 61 erfolgen, wobei im gezeigten Ausführungsbeispiel die flüssige Futterkomponente K8 in einem Zwischen- oder Speicherbehälter angeordnet ist, dessen Füllgewicht mittels einer rückwiegenden Waage 62 bestimmt wird. Auch bei der flüssigen Futterkomponente 8 wird mithin die dosiert zugeführte Menge über die rückwiegende Waage 62 als Wiegeeinrichtung permanent überwacht, kontrolliert und als zusätzliche Steuergröße an die zentrale Steuereinheit übermittelt. Die Zwischen- oder Speicherbehälter 41, 42, 43, 62 können ggf. vor einer vollständigen Entleerung dieser Behälter vorzugsweise mit hoher Geschwindigkeit über die Dosierschnecken 15 bis 17 und unter konstanter Abgabe mit den Dosierschnecken 18 bis 20 bzw. der Pumpe 62 nachgefüllt werden, um permanent auch die rückwiegend in Zwischenbehältern gemessenen Futterkomponenten der Fördereinrichtung 40 bzw. der Mischeinrichtung 50, während es Nachfüllens zumindest annähernd entsprechend dem vorgegebenen Anteil, zuführen zu können. Alternativ könnte auch, ähnlich wie bei den Silos 3A und 4A, auf einen zusätzlichen Zwischenbehälter umgeschaltet werden. Die Ansteuerung der einzelnen Anlagekomponenten kann nach demselben Prinzip aber auch ohne Leitkomponentenwechsel erfolgen, oder mit seltenem Leitkomponentenwechsel, weil beispielsweise die Anlagenkomponente für die aktuelle Leitkomponente gegenüber der Volllast um einen zu hohen Prozentsatz zurückbleibt.

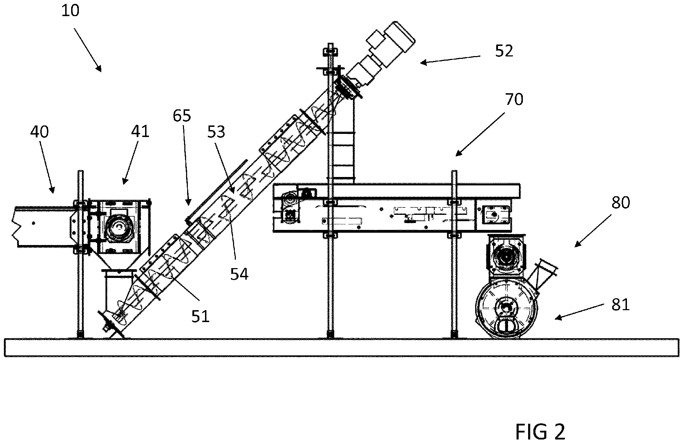

Fig. 2 zeigt schematisch im Detail den Endbereich des Kraftfutterwerks 10 mit einer Übergabestation 41 der Fördereinrichtung 40 an eine Mischeinrichtung 50 und mit einer nachgeschalteten Bandwaage 70 als Kontroll- und Endwaage für die insgesamt hergestellte Menge an Tierfutter. Die Bandwaage 70 wiederum fördert das hergestellte Tierfutter zu einer Übergabeeinrichtung 80, hier beispielsweise bestehend aus einer pneumatischen Fördereinrichtung mit einem angedeuteten Gebläse 81, um das im Kraftfutterwerk 10 hergestellte Tierfutter in einen nicht dargestellten Vorratssilo auch über große Höhen oder Strecken fördern zu können.

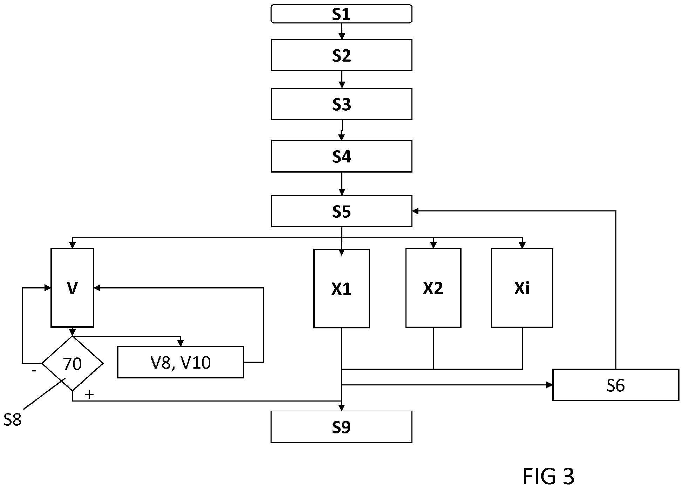

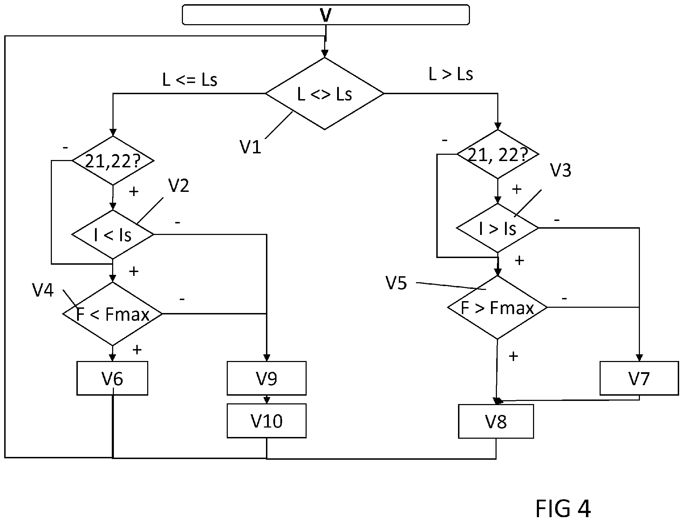

Das gemäß der Erfindung eingesetzte Fließprinzip zur Steuerung aller Anlagekomponenten wird nun unter zusätzlicher Bezugnahme auf die Ablaufdiagramme in den Fig. 3 und 4 erläutert. Der Verfahrensablauf läuft vorzugsweise softwaregesteuert in einer zentralen Steuereinheit ab, die über ein geeignetes Datenübertragungssystem, beispielsweise ein Bussystem (nicht gezeigt), mit sämtlichen Anlagekomponenten des Kraftfutterwerks 10 datentechnisch verbunden ist. Die Schritte S1, S2 im Ablaufdiagramm nach Fig. 2 finden vor dem Anlaufen des Kraftfutterwerks 10 statt und beinhalten die Eingabe eines neuen Auftrags (S1) mit einer bestimmten Rezeptur, das Starten einer geeigneten Software sowie das Berechnen der zur Bereitstellung der jeweiligen Gewichtsanteile der einzelnen Futterkomponenten K1 bis K8 erforderlichen Leistungen sowie Fördergeschwindigkeiten der einzelnen Anlagekomponenten. Im Schritt S3 wird das Kraftfutterwerk 10 gestartet und im Schritt S4 werden die einzelnen Anlagenkomponenten gestartet und z.B. die Wiegeeinrichtungen tariert. Hierbei wird entweder nach vorgegebener Programmierung oder entsprechend einem zuletzt für dieselbe Rezeptur durchgeführten Herstelldurchgang eine der Futterkomponenten als Leitkomponente ausgewählt und für diese Leitkomponente wird gemäß dem in Fig. 4 beispielhaft angedeuteten Verfahrensablauf V überprüft, ob mit den von der Steuereinheit vorgegebenen Soll-Leistungen (Ls) für die jeweiligen Anlagekomponenten bei gegebener Leitkomponente die für jede Futterkomponente benötigte Menge bereitgestellt werden kann.

Innerhalb des Verfahrensablaufs V gemäß Fig. 4 findet in einem ersten Verfahrensschritt V1 anhand der von den Wiegeeinrichtungen 31 bis 36, 62 zurückgelieferten Werte ein Vergleich zwischen der Soll-Leistung (Ls) und der Ist-Leistung (L) für die betrachtete Futterkomponente statt. Je nachdem, ob die Ist-Leistung L die Soll-Leistung Ls überschreitet (rechter Zweig) oder unterschreitet (linker Zweig) wird zuerst überprüft, ob es sich bei der jeweiligen aktuellen Leitkomponente um eine solche Komponente handelt, die mittels einer Bearbeitungseinrichtung wie beispielsweise einer der Mühlen 21,22 zwischenbearbeitet werden muss (+) oder nicht (-). Nur falls es sich um eine Mahlkomponente handelt, wird in den Schritten V2 oder V3 anhand eines Vergleichs beispielsweise des Ist-Mühlenstroms I zum Soll-Mühlenstrom Is überprüft, ob die Mahlgeschwindigkeit gesteigert (falls die Sollleistung nicht erreicht ist) oder vermindert werden kann (falls die Sollleistung überschritten wurde) oder muss. In Anhängigkeit dieser Überprüfung kann bereits eine erste Anpassung der Anlagekomponenten für die jeweilige Leitkomponente stattfinden, was automatisch einen Anpassungsprozess X1, X2, Xi für die weiteren Anlagekomponenten zur Herstellung der weiteren Futterkomponenten nach sich zieht, wie im Ablaufdiagramm nach Fig. 3 angedeutet. Falls es sich nicht um eine gemahlene Futterkomponente handelt, wie mit dem jeweiligen Zweig zu (-) angedeutet, wird in den Verfahrensschritten V4 bzw. V5 überprüft, inwieweit über die Fördergeschwindigkeit der Dosiereinrichtung der Leitkomponente, z.B. die Dosiereinrichtung 11, die zur Verfügung gestellte Menge der die Leitkomponente bildenden Futterkomponente erhöht werden kann. Hierzu würde dann z.B. die Ist-Fördergeschwindigkeit F der zugehörigen Dosierschnecken der Dosiervorrichtung, hier mithin der Dosiervorrichtung 11, ausgewertet. Je nach Ergebnis dieser Prüfung kann durch Erhöhung der Fördergeschwindigkeit wie in Schritt V6 angedeutet, die Materialzufuhr über die jeweilige Dosiereinrichtung erhöht werden, oder reduziert werden, wie mit Schritt V7 angedeutet, sofern die Ist-Fördergeschwindigkeit, wie im Zweig (+) hinter Schritt V5 angedeutet, nicht ohnehin die maximale Fördergeschwindigkeit Fmax übersteigt. Alternativ könnte die Steuer- und Regelungseinheit auch die jeweilige Soll-Leistung herabsetzen, wie in Schritt V8 angedeutet, oder, falls die maximale Fördergeschwindigkeit noch nicht erreicht wurde, zuerst die maximale Förderleistung ermitteln (V9) und dann den so bestimmten Wert als neue Soll-Leistung für diese Leitkomponente vorgegeben (V10). Wird die Leistung der Leitkomponente angepasst, findet automatisch auch, wie mit den Schritten X1, X2, Xi angedeutet, ein Abgleich sämtlicher Anlagekomponenten für die weiteren Futterkomponenten statt. Falls kein Leitkomponentenwechsel zugelassen wird, kann nach diesem Regelprinzip das Tierfutter bis zu einem sehr hohen Prozentanteil fertiggestellt werden, um dann anschließend beispielsweise nach einem Leitkomponentenwechsel, oder ohne Leitkomponente, die noch fehlenden Futterkomponenten hinzuzufügen.

Zeigt sich hierbei beim Nachregeln der Anlagekomponenten für eine der weiteren Futterkomponenten im Schritt Xi, dass mit den zugehörigen Anlagekomponenten die von der jeweiligen Leitkomponente vorgegebene Soll-Leistung nicht erreicht wird oder erreicht werden kann, kann, sofern bei der Verfahrensführung ein Leitkomponentenwechsel zugelassen wird, wie mit Schritt S6 im Ablaufdiagramm nach Fig. 3 angedeutet, ein Wechsel der Leitkomponente stattfinden und die Abläufe V für die Anlagenkomponenten zur Bereitstellung der neuen Leitkomponente und X für die Anlagenkomponenten zur Bereitstellung der weiteren Futterkomponenten laufen erneut ab. Bei der Nachregelung der einzelnen Futterkomponenten entsprechend der Vorgabe aus der Leitkomponente wird für jede einzelne nachgeregelte Komponente überprüft, inwieweit die Anlagekomponenten für die jeweilige Futterkomponente die von der Leitkomponente vorgegebene Leistung an der zu liefernden Gewichtsmenge erreichen kann. Wird hierbei für eine dieser Anlagekomponenten festgestellt, dass die Leistungsreserve der Anlagekomponente nicht ausreicht, entsprechend den Vorgaben der aktuellen Leitkomponente die benötigte Gewichtsmenge zu liefern, findet ein Leitkomponentenwechsel zu dieser Leitkomponente statt wodurch im Regelfall die Leistungsaufnahmen sämtlicher Anlagekomponenten kurzfristig reduziert werden. In anschließenden Schritten wird dann wieder versucht, für die Leitkomponente den leistungsoptimierten Betriebspunkt zu finden, um mit der Anlage die Höchstmenge an Tierfutter entsprechend der Rezeptur produzieren zu können.

Die entsprechende Anpassung der einzelnen Anlagekomponenten für die Leitkomponente sowie der Anlagekomponenten zur Herstellung der weiteren Futterkomponenten findet solange statt, bis Tierfutter in der beispielsweise im Schritt S1 vorgegebenen Gewichtsmenge produziert wurde. Diese Kontrolle kann beispielsweise im Schritt S9 stattfinden, in welchem die Messwerte einer weiteren Bandwaage 70, die, wie in Fig. 1 angedeutet, als Kontrollwaage hinter der Mischeinrichtung 70 angeordnet ist, und deren Messwerte regelmäßig erfasst werden, um das Gesamtgewicht des hergestellten Tierfutters zu überprüfen (Schritt S8). Wurde das Gesamtgewicht erreicht, findet gemäß Schritt S9 die Abschaltung zuerst der einzelnen Anlagenkomponenten statt, wozu vorzugsweise zuerst die einzelnen Dosiereinrichtungen beginnend mit denjenigen der Mühlen 21, 22 gestoppt werden und sukzessive sämtliche weiteren Anlagekomponenten, vorzugsweise entsprechend ihrer Anordnung entlang der Fördereinrichtung 40, abgeschaltet werden. Aus Fig. 2 ist gut zu erkennen, dass die schräg stehende Mischerschnecke 51, die an ihrem oberen Ende mittels eines Frequenzumrichter-gesteuerten Motors 52 angetrieben wird, im mittleren Drittel ihrer Gesamtlänge Unterbrechungen 53 der Schneckenwindung 54 aufweist, wodurch Material in diesem Bereich teilweise zurückfällt und insbesondere das unmittelbar am Schneckengang der Schneckenwindung 54 anliegende Material nicht mit der Schneckenwindung vollständig weiter transportiert wird, sondern teilweise zurückfällt bzw. nur über den Gesamtmaterialstrom weiter transportiert werden kann. Die Unterbrechungen 53, wobei im gezeigten Ausführungsbeispiel vier Unterbrechungen 53 der Schneckenwindung 54 vorgesehen sind, verbessern selbst bei kurzer Baulänge der Mischerschnecke 51 und Mischeinrichtung 50 die Durchmischung erheblich. Eine Einspritzdüse 65 für die flüssige Futterkomponente befindet sich im gezeigten Ausführungsbeispiel zwischen der ersten und zweiten Unterbrechung der Schneckenwindung 54. Auch das Gebläse 81, bei dem es sich beispielsweise um ein Schrotgebläse handeln kann, mit welchem eine pneumatische Förderung über Längen von bis zu 300 m erzielt werden kann, kann über die zentrale Steuereinheit gesteuert werden.

Die erfindungsgemäße Verfahrensführung nach dem Fließprinzip, bei welchem sämtliche Anlagekomponenten permanent leistungsgeregelt in Abhängigkeit von der maximal zu erzielenden Abgabemenge betrieben werden, ermöglicht es, für sämtliche Anlagekomponenten, insbesondere für die Mühlen 21, 22, für die einzelnen Dosierschnecken 11 bis 20, und auch für den Antriebsmotor 52 für die Mischerschnecke 51 der Mischeinrichtung 50 deutlich kleinere Motoren mit geringeren Antriebsleistungen einzusetzen, als dies im Stand der Technik bei vergleichbaren, nach dem Chargen- oder Batchprinzip arbeitenden Futterkraftwerken erforderlich war. Da die Antriebsleistungen der Mühle nicht dafür ausgelegt ist, in möglichst kurzer Zeit eine bestimmte Menge an Getreide zu mahlen, sondern tatsächlich ausgelegt sind, über die Gesamtlaufzeit der Anlage (Kraftfutterwerk) die erforderliche Gewichtsmenge der jeweiligen Getreide-Futterkomponente bereit zu stellen, können Mühlen zum Einsatz kommen, deren Maximalleistung nur 1/5 bis 1/3 der bisher verwendeten Mühlen ausmacht. Werden zwei oder mehr Stränge jeweils mit getrennter Mühle eingesetzt, kann die jeweilige Mühle optimiert für das jeweils zu mahlende Getreide als Futterkomponente ausgelegt werden, wodurch eine aufwendige Technik für Siebwechsel oder eine Steuerung, über welche Siebe aus einer Mühle gemahlenes Getreide abgezogen wird, entfallen kann. Da nicht nur die Mühlen, sondern auch die Mischerschnecke der Mischeinrichtung permanent läuft, werden Stromspitzen beim Anfahren der einzelnen Anlagekomponenten vermieden; gleichzeitig reicht eine geringe Antriebsleistung für die Mischerschnecke 51 aus, da mit der Mischerschnecke nicht die gesamte hergestellte Futtermenge an Tierfutter gemischt, sondern nur ein Teilbereich zu einer bestimmten Zeiteinheit gemischt werden muss, weswegen sich in der laufenden Mischerschnecke jeweils nur ein geringer Mengenanteil des insgesamt herzustellenden Tierfutters befindet.

Für den Fachmann ergebenden sich aus der vorhergehenden Beschreibung zahlreiche Modifikationen, die in den Schutzbereich der anhängenden Ansprüche fallen sollen. Im Ausführungsbeispiel ist eine Anlage mit Anlagekomponenten für acht unterschiedliche Futterkomponenten dargestellt. Es versteht sich, dass mit derselben Anlage auch Tierfutter aus weniger Futterkomponenten hergestellt werden kann. Zugleich versteht sich, dass die gesamte Anlage um weitere Anlagekomponenten für zusätzliche Futterkomponenten erweitert werden kann, wodurch sich allenfalls der Regelaufwand in der zentralen Steuereinheit erhöht und zusätzlicher Platzbedarf für den Vorratsbehälter, die Dosiervorrichtung und/oder die Wiegeeinrichtung für die zusätzliche Futterkomponente entsteht. Das Herstellungsprinzip, mit sämtlichen Dosiervorrichtungen aus sämtlichen für die Rezeptur benötigten Vorratsbehältern jeweils eine Futterkomponente bereitzustellen und zeitgleich zu verarbeiten, wird jedoch durch die Hinzufügung oder Weglassung von Anlagekomponenten für weitere Futterkomponenten nicht geändert.

## Patentansprüche

1. Verfahren zur Herstellung von Tierfutter aus Futterkomponenten, die aus mehreren Trockenstoffen und wenigstens einem Flüssigstoff mit Gewichtsanteilen gemäß einer vorgegebenen Rezeptur bestehen, wobei die einzelnen Futterkomponenten (K1-K8) dosiert über Dosiervorrichtungen (11-20, 61), deren Dosierleistung gesteuert veränderbar ist, aus Vorratsbehältern (3-9, 41-43) bereitgestellt werden, mittels Wiegeeinrichtungen (31-37, 62) gewichtsmäßig erfasst werden und mittels einer Fördereinrichtung (40) einer Mischeinrichtung (50) zugeführt werden, wobei wenigstens eine Futterkomponente aus Trockenfutter vor dem Mischen mittels einer Bearbeitungseinrichtung, deren Antriebsleistung gesteuert veränderbar ist, insbesondere einer Mühle (21, 22), bearbeitet wird, **dadurch gekennzeichnet, dass** simultan die mehreren Trockenstoffe und der wenigstens eine Flüssigstoff kontinuierlich aus den zugehörigen Vorratsbehälter entnommen werden und die Dosierleistung aller Dösiervorrichtungen (11-20, 61) leistungsgeregelt in Abhängigkeit von einer Leitkomponente gesteuert wird.

2. Verfahren nach Anspruch 1, **dadurch gekennzeichnet, dass** ein Leitkomponentenwechsel zugelassen wird, wobei vorzugsweise jeweils diejenige Futterkomponente die Leitkomponente bildet, bei deren Bereitstellung gemäß Rezeptur die zugehörige Dosier- oder Bearbeitungseinrichtung die geringsten Leistungsreserven gegenüber einem Betrieb unter Volllast hat.

3. Verfahren nach Anspruch 1 oder 2, **dadurch gekennzeichnet, dass** die Dosiervorrichtung oder die Bearbeitungseinrichtung für die Leitkomponente leistungsoptimierend anhand der maximal erreichbaren Volllast geregelt wird.

4. Verfahren nach Anspruch 1, 2 oder 3, **dadurch gekennzeichnet, dass** sämtliche Futterkomponenten aus Trockenfutter mit einer zentralen Fördervorrichtung gefördert werden und vorzugsweise geschichtet der Mischeinrichtung zugeführt werden.

5. Verfahren nach einem der Ansprüche 1 bis 4, **dadurch gekennzeichnet, dass** die flüssige Futterkomponente(n) in der Mischeinrichtung (50) zugegeben wird (werden).

6. Verfahren nach einem der Ansprüche 1 bis 5, **dadurch gekennzeichnet, dass** wenigstens eine Wiegeeinrichtung aus einer Bandwaage (31-35) besteht, wobei vorzugsweise die Bandlaufgeschwindigkeit der Bandwaage gemessen und/oder zur exakteren Dosierung der zugehörigen Futterkomponente gesteuert wird.

7. Vorrichtung zur Herstellung von Tierfutter aus Futterkomponenten, die mehrere Trockenstoffe und wenigstens einen Flüssigstoff mit Gewichtsanteilen gemäß einer vorgegebenen Rezeptur umfassen und in Vorratsbehältern (3-9, 41-43) bevorratet sind, insbesondere nach einem Verfahren gemäß einem der vorhergehenden Ansprüche, mit Dosiervorrichtungen (11-20, 61), deren Dosierleistung gesteuert veränderbar ist, zum dosierten Bereitstellen der jeweiligen Futterkomponente (K1-K8) aus dem zugehörigen Vorratsbehälter, mit Wiegeeinrichtungen (31-37, 62) zum Erfassen des Gewichts der bereitgestellten Futterkomponente, mit einer Fördereinrichtung (40) zum Zuführen der Futterkomponenten zu einer Mischeinrichtung (50), und mit wenigstens einer Bearbeitungseinrichtung, deren Antriebsleistung gesteuert veränderbar ist, insbesondere einer Mühle (21, 22), zum Bearbeiten wenigstens einer Futterkomponente aus Trockenfutter vor dem Mischen aller Futterkomponenten mittels der Mischeinrichtung, **dadurch gekennzeichnet, dass** simultan sämtliche Dosiervorrichtungen zur kontinuierlichen Entnahme der mehreren Trockenstoffe und der wenigstens einen Flüssigkomponente aus den zugehörigen Vorratsbehältern betätigbar sind und die Dosierleistung aller Dosiervorrichtungen (11-20, 61) mittels einer Steuereinrichtung leistungsgeregelt in Abhängigkeit von einer Leitkomponente ansteuerbar ist.

8. Vorrichtung nach Anspruch 7, **dadurch gekennzeichnet, dass** die Leitkomponente, vorzugsweise automatisch, änderbar ist, wobei bei einem Leitkomponentenwechsel diejenige Futterkomponente die neue Leitkomponente bildet, bei deren Bereitstellung gemäß Rezeptur die zugehörige Dosier- oder Bearbeitungseinrichtung die geringsten Leistungsreserven gegenüber einem Betrieb unter Volllast hat.

9. Vorrichtung nach Anspruch 7 oder 8, **dadurch gekennzeichnet, dass** wenigstens eine Wiegeeinrichtung aus einer Bandwaage (31-34) besteht, wobei vorzugsweise die Bandwaage mit einer Einrichtung zum Messen der Bandlaufgeschwindigkeit der Bandwaage versehen ist und/oder die Bandlaufgeschwindigkeit der Bandwaage zur exakteren Dosierung der zugehörigen Futterkomponente steuerbar ist.

10. Verfahren oder Vorrichtung nach einem der vorhergehenden Ansprüche, **dadurch gekennzeichnet, dass** die Mischeinrichtung (50) eine schrägstehende Mischerschnecke (51) und/oder eine unterbrochene Mischerschnecke (51) aufweist.

11. Verfahren oder Vorrichtung nach einem der vorhergehenden Ansprüche, **gekennzeichnet durch** unterschiedliche Wiegeeinrichtungen (31-34; 35-37; 62) für die Futterkomponenten, wobei wenigstens eine Wiegeeinrichtung (35-37; 62) eine rückwiegenden Waage für den Vorratsbehälter oder einen der Dosiervorrichtung zugeordneten Zwischenbehälter (41-43) bildet.

12. Verfahren oder Vorrichtung nach einem der vorhergehenden Ansprüche, **gekennzeichnet durch** mehrere getrennt voneinander ansteuerbare Bearbeitungseinrichtungen, insbesondere Mühlen, für unterschiedliche Futterkomponenten, denen die zugehörige Futterkomponente über eine der Dosiervorrichtungen zuführbar ist, wobei vorzugsweise eine Bandwaage als Wiegeeinrichtungen für diese Futterkomponente im Materialfluss zwischen Bearbeitungseinrichtung und Fördervorrichtung angeordnet ist.

13. Verfahren oder Vorrichtung nach einem der vorhergehenden Ansprüche, **dadurch gekennzeichnet, dass** wenigstens eine Futterkomponente mittels der zugehörigen Dosiervorrichtung (13, 14) aus dem Vorratsbehälter unmittelbar einer Bandwaage (33, 34) als Wiegeeinrichtung zuführbar ist.

14. Verfahren oder Vorrichtung nach einem der vorhergehenden Ansprüche, **gekennzeichnet durch** eine zentralen Fördereinrichtung (40) zum Fördern sämtlicher Futterkomponenten aus Trockenfutter, wobei die Vorratsbehälter und/oder Wiegeeinrichtungen entlang der Förderstrecke der zentralen Fördervorrichtung verteilt angeordnet sind und/oder wenigstens eine der mittels Bearbeitungseinrichtungen (21, 22) bearbeiteten Futterkomponenten zuerst der Fördereinrichtung (40) zuführbar ist oder zugeführt wird.

15. Verfahren oder Vorrichtung nach einem der vorhergehenden Ansprüche, **gekennzeichnet durch** eine im Materialfluss hinter der Mischeinrichtung (50) angeordnete Kontroll-Wiegeeinrichtung (70), die vorzugsweise aus einer Bandwaage besteht.

## Claims

1. Method for the production of animal feed from feed components, which consist of multiple dry materials and at least one liquid material with proportions by weight in accordance with a predefined recipe, the individual feed components (K1-K8) being provided from storage containers (3-9, 41-43) in a manner metered via metering devices (11-20, 61), the metered output of which can be varied under control, the weight being detected by means of weighing units (31-37, 62) and the said components being fed by means of a conveying unit (40) to a mixing unit (50), at least one feed component comprising dry feed being processed by means of a processing unit, the drive output of which can be varied under control, in particular a mill (21, 22), before the mixing, **characterized in that** the multiple dry materials and the at least one liquid material are simultaneously removed continuously from the associated storage containers, and the metered output from all the metering devices (11-20, 61) is controlled under output control, depending on a guide component.

2. Method according to Claim 1, **characterized in that** a guide component change is permitted, the guide component preferably being formed by that respective feed component in the provision of which in accordance with the recipe the associated metering or processing unit has the lowest power reserves as compared with operation under full load.

3. Method according to Claim 1 or 2, **characterized in that** the metering device or the processing unit for the guide component is controlled so as to optimize output by using the maximum achievable full load.

4. Method according to Claim 1, 2 or 3, **characterized in that** all the feed components comprising dry feed are conveyed by a central conveying device and are preferably fed to the mixing unit in layered form.

5. Method according to one of Claims 1 to 4, **characterized in that** the liquid feed component(s) is (are) added in the mixing unit (50).

6. Method according to one of Claims 1 to 5, **characterized in that** at least one weighing unit comprises a belt weigher (31-35), wherein the belt running speed of the belt weigher is preferably measured and/or is controlled for the more exact metering of the associated feed component.

7. Device for the production of animal feed from feed components, which comprise multiple dry materials and at least one liquid material with proportions by weight in accordance with a predefined recipe and are stored in storage containers (3-9, 41-43), in particular according to a method according to one of the preceding claims, having metering devices (11-20, 61), the metered output from which can be varied under control, for the metered provision of the respective feed component (K1-K8) from the associated storage container, having weighing units (31-37, 62) for detecting the weight of the feed component provided, having a conveying unit (40) for feeding the feed components to a mixing unit (50), and having at least one processing unit, the drive output of which can be varied under control, in particular a mill (21, 22), for processing at least one feed component comprising dry feed before the mixing of all the feed components by means of the mixing unit, **characterized in that** all the metering devices can be actuated simultaneously for the continuous removal of the multiple dry materials and the at least one liquid component from the associated storage containers, and the metered output of all the metering devices (11-20, 61) can be controlled by means of a control unit under output control, depending on a guide component.

8. Device according to Claim 7, **characterized in that** the guide component can be changed, preferably automatically, wherein during a guide component change, the guide component is formed by that feed component in the provision of which in accordance with the recipe the associated metering or processing unit has the lowest power reserves as compared with operation under full load.

9. Device according to Claim 7 or 8, **characterized in that** at least one weighing unit comprises a belt weigher (31-34), wherein the belt weigher is preferably provided with a unit for measuring the belt running speed of the belt weigher and/or the belt running speed of the belt weigher can be controlled for the more exact metering of the associated feed component.

10. Method or device according to one of the preceding claims, **characterized in that** the mixing unit (50) has an inclined mixer screw (51) and/or an interrupted mixer screw (51).

11. Method or device according to one of the preceding claims, **characterized by** different weighing units (31-34; 35-37; 62) for the feed components, wherein at least one weighing unit (35-37; 62) forms a remainder-weighing weigher for the storage container or an intermediate container (41-43) assigned to the metering device.

12. Method or device according to one of the preceding claims, **characterized by** multiple processing units that can be driven separately from one another, in particular mills, for different feed components, to which the associated feed components can be fed via one of the metering devices, wherein a belt weigher is preferably arranged in the material flow between processing unit and conveying device as weighing devices for these feed components.

13. Method or device according to one of the preceding claims, **characterized in that** at least one feed component can be fed out of the storage container directly to a belt weigher (33, 34) as weighing unit by means of the associated metering device (13, 14).

14. Method or device according to one of the preceding claims, **characterized by** a central conveying unit (40) for conveying all the feed components comprising dry feed, wherein the storage containers and/or weighing units are arranged to be distributed along the conveying section of the central conveying device, and/or at least one of the feed components processed by means of processing units (21, 22) is or can be fed first to the conveying unit (40).

15. Method or device according to one of the preceding claims, **characterized by** a control weighing unit (70) which is arranged downstream of the mixing unit (50) in the material flow and which preferably comprises a belt weigher.

## Revendications

1. Procédé de fabrication d'aliments pour animaux à partir de composants d'aliments pour animaux, qui se composent de plusieurs substances sèches et d'au moins une substance liquide avec des proportions pondérales conformes à une recette prédéterminée, dans lequel on prépare les composants d'aliments individuels (K1-K8) à partir de réservoirs de stockage (3-9, 41-43) d'une façon dosée au moyen de dispositifs de dosage (11-20, 61), dont le débit de dosage est réglable sur commande, on détecte leur poids au moyen de dispositifs de pesage (31-37, 62) et on les envoie à un dispositif de mélange (50) au moyen d'un dispositif de transport (40), dans lequel on traite au moins un composant d'aliment en aliment sec avant le mélange au moyen d'un dispositif de traitement, dont la puissance d'entraînement est réglable sur commande, en particulier un broyeur (21, 22), **caractérisé en ce que** l'on prélève simultanément les multiples substances sèches et ladite au moins une substance liquide de façon continue hors des réservoirs de stockage respectifs et on commande le débit de dosage de tous les dispositifs de dosage (11-20, 61) par régulation du débit en fonction d'un composant de guidage.

2. Procédé selon la revendication 1, **caractérisé en ce que** l'on autorise un changement de composant de guidage, dans lequel le composant de guidage est respectivement formé par le composant d'aliment pour la préparation duquel conformément à la recette le dispositif de dosage ou de traitement correspondant a les plus faibles réserves de puissance par rapport à un fonctionnement à pleine charge.

3. Procédé selon la revendication 1 ou 2, **caractérisé en ce que** l'on régule le dispositif de dosage ou le dispositif de traitement pour le composant de guidage en optimisant la puissance en fonction de la charge totale maximale réalisable.

4. Procédé selon la revendication 1, 2 ou 3, **caractérisé en ce que** l'on transporte tous les composants d'aliments en aliments secs avec un dispositif de transport central ou on les envoie de préférence en couches au dispositif de mélange.

5. Procédé selon l'une quelconque des revendications 1 à 4, **caractérisé en ce que** l'on ajoute le/les composant(s) d'aliments liquide(s) dans le dispositif de mélange (50).

6. Procédé selon l'une quelconque des revendications 1 à 5, **caractérisé en ce qu'**au moins un dispositif de pesage se compose d'une bascule à bande (31-35), dans lequel on mesure de préférence la vitesse de défilement de la bande de la bascule à bande et/ou on la commande pour un dosage plus exact des composants d'aliments correspondants.

7. Dispositif pour la fabrication d'aliments pour animaux à partir de composants d'aliments, qui comprennent plusieurs substances sèches et au moins une substance liquide avec des proportions pondérales conformes à une recette prédéterminée et qui sont stockées dans des réservoirs de stockage (3-9, 41-43), en particulier par un procédé selon l'une quelconque des revendications précédentes, avec des dispositifs de dosage (11-20, 61), dont le débit de dosage peut être réglé sur commande, pour la préparation dosée des composants d'aliments respectifs (K1-K8) à partir du réservoir de stockage correspondant, avec des dispositifs de pesage (31-37, 62) pour détecter le poids des composants d'aliments préparés, avec un dispositif de transport (40) pour amener les composants d'aliments à un dispositif de mélange (50), et avec au moins un dispositif de traitement dont la puissance d'entraînement est réglable sur commande, en particulier un broyeur (21, 22), pour le traitement d'au moins un composant d'aliment en aliment sec avant le mélange de tous les composants d'aliments au moyen du dispositif de mélange, **caractérisé en ce que** tous les dispositifs de dosage peuvent être actionnés simultanément pour le prélèvement continu des multiples substances sèches et dudit au moins un composant liquide hors des réservoirs de stockage correspondants et le débit de dosage de tous les dispositifs de dosage (11-20, 61) peut être commandé au moyen d'un dispositif de commande de façon régulée en puissance en fonction d'un composant de guidage.

8. Dispositif selon la revendication 7, **caractérisé en ce que** le composant de guidage peut être changé, de préférence automatiquement, dans lequel lors d'un changement de composant de guidage, le nouveau composant de guidage est formé par le composant d'aliment pour la préparation duquel conformément à la recette le dispositif de dosage ou de traitement correspondant a les plus faibles réserves de puissance par rapport à un fonctionnement à pleine charge.

9. Dispositif selon la revendication 7 ou 8, **caractérisé en ce qu'**au moins un dispositif de pesage se compose d'une bascule à bande (31-34), dans lequel la bascule à bande est de préférence munie d'un dispositif pour la mesure de la vitesse de défilement de la bande de la bascule à bande et/ou la vitesse de défilement de la bande de la bascule à bande peut être commandée en vue d'un dosage plus exact du composant d'aliment correspondant.

10. Procédé ou dispositif selon l'une quelconque des revendications précédentes, **caractérisé en ce que** le dispositif de mélange (50) présente une vis de mélange inclinée (51) et/ou une vis de mélange interrompue (51) .

11. Procédé ou dispositif selon l'une quelconque des revendications précédentes, **caractérisé par** différents dispositifs de pesage (31-34; 35-37; 62) pour les composants d'aliments, dans lequel au moins un dispositif de pesage (35-37; 62) forme une bascule de second pesage pour le réservoir de stockage ou un réservoir intermédiaire (41-43) associé au dispositif de dosage.

12. Procédé ou dispositif selon l'une quelconque des revendications précédentes, **caractérisé par** plusieurs dispositifs de traitement pouvant être commandés séparément l'un de l'autre, en particulier des broyeurs, pour différents composants d'aliments, auxquels le composant d'aliment correspondant peut être amené par un des dispositifs de dosage, dans lequel une bascule à bande est de préférence disposée en tant que dispositif de pesage pour ce composant d'aliment dans le flux de matières entre le dispositif de traitement et le dispositif de transport.

13. Procédé ou dispositif selon l'une quelconque des revendications précédentes, **caractérisé en ce qu'**au moins un composant d'aliment peut être amené au moyen du dispositif de dosage correspondant (13, 14) à partir du réservoir de stockage directement à une bascule à bande (33, 34) en tant que dispositif de pesage.

14. Procédé ou dispositif selon l'une quelconque des revendications précédentes, **caractérisé par** un dispositif de transport central (40) pour le transport de tous les composants d'aliments en aliments secs, dans lequel les réservoirs de stockage et/ou les dispositifs de pesage sont disposés de façon répartie le long de la section de transport du dispositif de transport central et/ou au moins un des composants d'aliments traités au moyen de dispositifs de traitement (21, 22) peut être ou est amené d'abord au dispositif de transport (40).

15. Procédé ou dispositif selon l'une quelconque des revendications précédentes, **caractérisé par** un dispositif de pesage de contrôle (70) disposé dans le flux de matières après le dispositif de mélange (50), qui est de préférence constitué par une bascule à bande.
